# EUROPÄISCHE PATENTSCHRIFT

(11) **EP 0 898 814 B1**
(45) Veröffentlichungstag und Bekanntmachung des Hinweises auf die Patenterteilung: **16.08.2000**
(21) Anmeldenummer: 97924891.1
(22) Anmeldetag: 16.05.1997
(51) Int. Cl.: H04B 1/38, H04Q 7/32, H04H 1/00

(54) **RUNDFUNKEMPFÄNGER MIT INTEGRIERTER FERNSPRECHEINRICHTUNG**
BROADCAST RECEIVER WITH INTEGRATED TELEPHONE UNIT
RECEPTEUR RADIO AVEC DISPOSITIF TELEPHONIQUE INTEGRE

(30) Priorität: 17.05.1996 DE 19619815
(43) Veröffentlichungstag der Anmeldung: 03.03.1999
(73) Patentinhaber: ROBERT BOSCH GMBH, 70442 Stuttgart (DE)
(72) Erfinder: REICHSTEIN, Martin, D-31137 Hildesheim (DE)
(86) Internationale Anmeldenummer: DE9700993
(87) Internationale Veröffentlichungsnummer: WO9744910

(56) Entgegenhaltungen:
- EP-A- 0 483 956
- DE-A- 4 126 435
- DE-A- 4 408 930

## Beschreibung

### Stand der Technik

Die Erfindung geht von einem Rundfunkempfänger nach der Gattung der Hauptansprüche aus.

Aus der DE 40 09 899 C1 ist eine Kraftfahrzeugkommunikationszentrale bekannt, die dem gemeinsamen Betrieb eines Autotelefons und eines Autoradios dient. Die Kraftfahrzeugkommunikationszentrale umfaßt weitere Anschlüsse für im Kraftfahrzeuginnenraum wirksam werdende Geräte. Beim Empfang eines Telefonanrufs werden die übrigen an die Zentrale angeschlossenen Geräte durch den Gabelumschalter akustisch unwirksam geschaltet. Bei Abnehmen des Hörers des Autotelefons werden alle Störgeräuschquellen im Augenblick des Abhebens ausgeschaltet und erst beim Auflegen des Hörers wieder eingeschaltet. Als Störgeräuschquelle wird dabei auch das Autoradio betrachtet.

Aus DE 44 08 930 A1 ist ein Kombinationsgerät bekannt, bei dem die aus drei Geräten stammenden niederfrequenten Ausgangssignale alternativ mit Hilfe einer Umschaltanordnung in einer gewünschten Prioritätsfolge an den NF-Verstärker übertragen werden. Eines der Geräte kann beispielsweise ein an die Umschaltanordnung angeschlossenes CB-Funkgerät sein, welches im Empfangsbetrieb nicht kontinuierlich ein Ausgangssignal bereitstellt, da in Sende- oder Sprechpausen kein Funksignal von dem CB-Funkgerät empfangen wird. Während solcher Sende- oder Sprechpausen ist es erwünscht, daß automatisch das Ausgangssignal entweder eines Tonträger-Abspielgerätes oder eines Radiogerätes mit Hilfe der Lautsprecher wiedergegeben wird. Weiterhin ist gewährleistet, daß im Falle des Vorhandenseins einer Verkehrsdurchsage das Verkehrsfunksignal unabhängig davon, ob momentan ein CB-Funksignal oder ein Ausgangssignal des Abspielgerätes an den NF-Verstärker übertragen wird, zur Wiedergabe über die Lautsprecher auf den NF-Verstärker aufgeschaltet wird.

Aus der EP 0 483 956 A2 ist ein Rundfunkempfänger mit kombiniertem Funktelefon bekannt, wobei in einem gemeinsamen Gehäuse der Rundfunkempfänger und ein Sendeempfänger eines mobilen Funktelefons angeordnet sind. Der Empfänger und der Sendeempfänger können einen gemeinsamen Audioverstärker und einen externen Lautsprecher miteinander teilen. Der Rundfunkempfänger wird automatisch stumm geschaltet, wann immer das Telefon in Gebrauch ist oder kommt.

### Vorteile der Erfindung

Der erfindungsgemäße Rundfunkempfänger mit den Merkmalen des unabhängigen Anspruchs 1 hat demgegenüber den Vorteil, daß nicht sämtliche Lautsprecher im Fernsprechbetrieb auf Fernsprechwiedergabe geschaltet sein müssen, sondern daß gleichzeitig Rundfunkwiedergabe und Fernsprechwiedergabe über die Lautsprecher möglich ist. Auf diese Weise bleiben dem Benutzer im Fernsprechbetrieb gleichzeitig über Rundfunk ausgestrahlte Informationen nicht vorenthalten.

Vorteilhaft ist außerdem, daß die teilweise Umschaltung der Lautsprecher auf Rundfunkwiedergabe automatisch in Abhängigkeit des Empfangs eines vorgegebenen Signals durch den Rundfunkempfänger erfolgt. Auf diese Weise kann die teilweise Umschaltung der Lautsprecher auf Runkfunkwiedergabe auf solche Fälle beschränkt werden, in denen besonders wichtige Informationen über Rundfunk ausgestrahlt und daher durch ein Kennungssignal gekennzeichnet sind. Somit wird der Fernsprechbetrieb nur bei besonders wichtigen über Rundfunk ausgestrahlten Informationen "gestört".

Ein weiterer Vorteil besteht darin, daß die Umschaltung automatisch erfolgt, wodurch die Bedienung des Rundfunkempfängers wesentlich vereinfacht wird.

Durch die im abhängigen Anspruch 2 angeführte Maßnahme ist eine vorteilhafte Weiterbildung und Verbesserung des im unabhängigen Anspruch 1 angegebenen Rundfunkempfängers möglich.

Vorteilhaft ist dabei die Umschaltung in Abhängigkeit der Detektion eines Kennungssignales für Verkehrsmeldungen. Bei Verwendung des Rundfunkempfänger in einem Kraftfahrzeug wird der Benutzer auf diese Weise auch im Fernsprechbetrieb über die aktuelle Verkehrslage informiert.

Der erfindungsgemäße Rundfunkempfänger mit den Merkmalen des unabhängigen Anspruchs 3 hat den Vorteil, daß bei Schleifenbelegung im Rundfunkempfangsbetrieb Lautsprecher zumindest teilweise auf Fernsprechwiedergabe umgeschaltet sind. Auf diese Weise kann der Benutzer gleichzeitig Radio hören und telefonieren. Außerdem führt auch hier der Vorteil der automatischen Umschaltung dazu, daß die Bedienung des Rundfunkempfängers wesentlich vereinfacht wird. Der Vorteil bei einer Umschaltung sämtlicher Lautsprecher bei Schleifenbelegung besteht darin, daß der Fernsprechbetrieb nicht durch Rundfunkempfang "gestört" wird, wobei der Benutzer den Rundfunkempfang nicht selbst abschalten muß.

Durch die in den abhängigen Ansprüchen 4 bis 6 angegebenen Maßnahmen sind vorteilhafte Weiterbildungen und Verbesserungen des in den unabhängigen Ansprüchen 1 und 3 angegebenen Rundfunkempfängers möglich.

Vorteilhaft nach Anspruch 4 ist, daß verschiedene vorgegebene Belegungen der Lautsprecher mit Fernsprech- und Rundfunksignalen schaltbar sind. Auf diese Weise ist eine variable Zuordnung der Fernsprech- und Rundfunksignale zu den verschiedenen Lautsprechern möglich und kann benutzerindividuell gewählt werden.

Vorteilhaft ist außerdem, daß ein Schaltvorgang nach Auswahl einer vorgegebenen Belegung mittels einer Bedieneinheit einleitbar ist. Auf diese Weise kann der Benutzer eine eingestellte Zuordnung der Fernsprech- und Rundfunksignale zu den verschiedenen Lautsprechern nach seinen Wünschen umschalten.

### Zeichnung

Ein Ausführungsbeispiel der Erfindung ist in der Zeichnung dargestellt und in der nachfolgenden Beschreibung näher erläutert. Es zeigen:

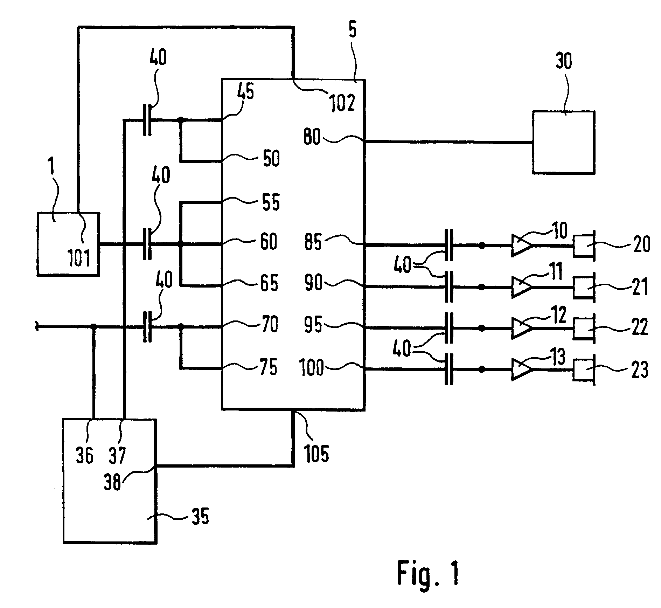

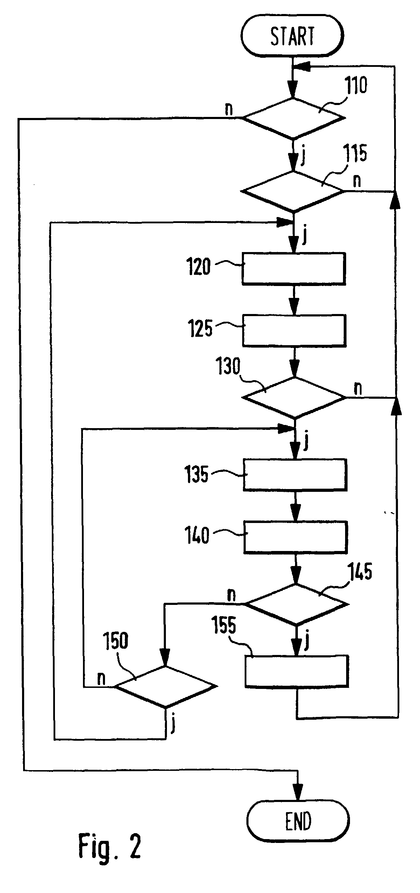

Figur 1 ein Blockschaltbild eines Rundfunkempfängers mit integrierter Fernsprecheinrichtung und Steuerschaltung und Figur 2 einen Ablaufplan für die Funktionsweise der Steuerschaltung.

### Beschreibung des Ausführungsbeispiels

Figur 1 zeigt das Schaltbild eines Rundfunkempfängers mit integrierter Fernsprecheinrichtung 1, der beispielsweise in Kraftfahrzeugen eingesetzt wird. Die Fernsprecheinrichtung 1 ist in dem genannten Beispiel als Mobilfunkeinrichtung ausgeführt. Der Rundfunkempfänger weist einen Empfangsteil 35 auf. Der Empfangsteil 35 dient dem Empfang und der Demodulation von FM-Rundfunksignalen. Für Stereoempfang weist der Empfangsteil 35 zwei Ausgänge 36 und 37 auf, wobei am ersten Ausgang 36 NF-Rundfunksignale des linken Stereokanals und am zweiten Ausgang 37 NF-Rundfunksignale des rechten Stereokanals bei FM-Stereo-Rundfunkempfang anliegen. Am Ausgang der Fernsprecheinrichtung 1 liegen im Fernsprechbetrieb nach Demodulation NF-Fernsprechsignale an. Der Rundfunkempfänger weist außerdem eine Steuerschaltung 5 auf. Die Steuerschaltung 5 weist drei Eingänge 45, 50 und 55 für rechte Stereokanäle und drei Eingänge 65, 70 und 75 für linke Stereokanäle sowie einen Monoeingang 60 auf. Auf diese Weise können an die Steuerschaltung 5 maximal drei Stereoquellen und eine Monoquelle angeschlossen werden. Über einen Bediengeräte-Ein-/Ausgang 80 ist die Steuerschaltung 5 über einen Datenbus mit einer Bedieneinheit 30 verbunden. Die Steuerschaltung 5 weist vier Ausgänge 85, 90, 95 und 100 zur Ansteuerung jeweils einer Endstufe 10, 11, 12 und 13 auf. Von den Endstufen 10, 11, 12, 13 werden vier Lautsprecher 20, 21, 22, 23 angesteuert, die beim oben genannten Beispiel vorne links, vorne rechts, hinten links und hinten rechts im Innenraum des Kraftfahrzeugs verteilt sind. Dabei ist der erste Ausgang 85 über die erste Endstufe 10 mit dem ersten Lautsprecher 20 vorne links verbunden. Der zweite Ausgang 90 ist über die zweite Endstufe 11 mit dem zweiten Lautsprecher 21 vorne rechts verbunden. Der dritte Ausgang 95 ist über die dritte Endstufe 12 mit dem dritten Lautsprecher 22 hinten links verbunden. Der vierte Ausgang 100 ist über die vierte Endstufe 13 mit dem vierten Lautsprecher 23 hinten rechts verbunden. Zwischen die vier Ausgänge 85, 90, 95 und 100 und die vier Endstufen 10, 11, 12, 13 ist jeweils ein Koppelkondensator 40 zur Unterdrückung des Gleichanteils geschaltet. Der Ausgang der Fernsprecheinrichtung 1 ist über einen Koppelkondensator 40 zur Gleichstromunterdrückung mit dem dritten Eingang 55 für die rechten Stereokanäle, mit dem ersten Eingang 65 für die linken Stereokanäle und mit dem Monoeingang 60 der Steuerschaltung 5 verbunden. Der erste Ausgang 36 des Empfangsteils 35 ist ebenfalls über einen Koppelkondensator 40 zur Gleichstromunterdrückung mit dem zweiten und dem dritten Eingang 70 und 75 der Steuerschaltung 5 für die linken Stereokanäle verbunden. Der zweite Ausgang 37 des Empfangsteils 35 ist über einen Koppelkondensator 40 zur Gleichstromunterdrückung mit dem ersten und dem zweiten Eingang 45 und 50 der Steuerschaltung 5 für die rechten Stereokanäle verbunden. Der Empfangsteil 35 weist außerdem einen dritten Ausgang 38 auf, der zur Abgabe eines Kennungssignals für Verkehrsmeldungen dient und mit einem ersten Kennungssignaleingang 105 der Steuerschaltung 5 verbunden ist. Die Fernsprecheinrichtung 1 weist einen Ausgang 101 zur Abgabe eines Kennungssignals für Schleifenbelegung auf, der mit einem zweiten Kennungssignaleingang 102 der Steuerschaltung 5 verbunden ist.

Über den Monoeingang 60 der Steuerschaltung 5 kann ein Telefongespräch auf allen vier Lautsprechern 20,...,23 wiedergegeben werden. Die Beschaltung des dritten Eingangs 55 der Steuerschaltung 5 für die rechten Stereokanäle mit dem Ausgang der Fernsprecheinrichtung 1 ermöglicht die Ansteuerung nur der rechten Lautsprecher 21 und 23 mit Fernsprechsignalen, die Beschaltung des ersten Eingangs 65 der Steuerschaltung 5 für die linken Stereokanäle mit dem Ausgang der Fernsprecheinrichtung 1 ermöglicht die Ansteuerung nur der linken Lautsprecher 20 und 22 mit Fernsprechsignalen. Die Fernsprecheinrichtung 1 wird somit sowohl als Mono- als auch als Pseudo-Stereoquelle verwendet. Mit der Fernsprecheinrichtung 1 und dem FM-Tuner sind somit zwei Stereoquellen und eine Monoquelle an die Steuerschaltung 5 angeschlossen. Die noch freien Stereoeingänge werden ebenfalls mit den Ausgängen 36 und 37 des Empfangsteils 35 beschaltet, damit sie nicht undefiniertes Potential aufweisen. In weiteren Ausführungsbeispielen wäre jedoch denkbar, das verbliebene Stereoeingangspaar mit einer weiteren Stereoquelle zu beschalten. Dies könnte beispielsweise ein CD-Wechsler sein.

Die Steuerschaltung 5 ermöglicht die Schaltung von verschiedenen vorgegebenen Belegungen der Lautsprecher 20,...,23 mit Fernsprech- und Rundfunksignalen. So können beispielsweise die linken Lautsprecher 20 und 22 mit Rundfunksignalen des linken Stereokanals und die rechten Lautsprecher 21 und 23 mit Rundfunksignalen des rechten Stereokanals belegt werden. Weiterhin ist die Belegung der linken Lautsprecher 20 und 22 mit Rundfunksignalen des linken Stereokanals und die Belegung der rechten Lautsprecher 21 und 23 mit Fernsprechsignalen möglich. Analog können die linken Lautsprecher 20 und 22 mit Fernsprechsignalen und die rechten Lautsprecher 21 und 23 mit Rundfunksignalen des rechten Stereokanals geschaltet werden. Schließlich ist auch die Beschaltung sämtlicher Lautsprecher 20,...,23 mit Fernsprechsignalen vorzugsweise unter Verwendung des Monoeingangs 60 der Steuerschaltung 5 möglich. Die verschiedenen vorgegebenen Belegungen der Lautsprecher 20,...,23 lassen sich mittels der Bedieneinheit 30 vom Benutzer auswählen, wobei der zur gewählten Belegung der Lautsprecher 20,...,23 benötigte Schaltvorgang dann durch die Steuerschaltung 5 einleitbar ist.

Die Funktionsweise der Steuerschaltung 5 wird gemäß Figur 2 anhand eines Ablaufdiagramms beschrieben. Nach dem Einschalten des Rundfunkempfängers wird bei Programmpunkt 110 geprüft, ob Rundfunksignale an einem der mit den Empfangsstufen 35 verbunden Eingängen 45, 50, 70, 75 der Steuerschaltung 5 anliegen. Ist dies der Fall, so wird zu Programmpunkt 115 verzweigt, andernfalls wird der Programmteil verlassen. Bei Programmpunkt 115 wird geprüft, ob Schleifenbelegung in der Fernsprecheinrichtung 1 vorliegt, das heißt, ob ein entsprechendes Kennungssignal am 2. Kennungssignaleingang 102 der Steuerschaltung 5 anliegt. Ist dies der Fall, so wird zu Programmpunkt 120 verzweigt, andernfalls wird zu Programmpunkt 110 verzweigt. Bei Programmpunkt 120 findet eine Abfrage bei der Bedieneinheit 30 nach einem Belegungswunsch für die Lautsprecher 20,..,23 statt. Bei Programmpunkt 125 wird die gewünschte Belegung durch die Steuerschaltung 5 geschaltet. Liegt an der Bedieneinheit 30 kein Belegungswunsch des Benutzers vor, so werden alle vier Lautsprecher 20,...,23 mit Fernsprechsignalen beschaltet. Bei Programmpunkt 130 wird geprüft, ob ein vorgegebenes Kennungssignal an dem 1. Kennungssignaleingang 105 der Steuerschaltung 5 anliegt. Wird dabei ein über Rundfunk ausgestrahltes, auf einen 57kHz Hilfsträger aufmoduliertes Kennungssignal für Verkehrsmeldungen nach dem RDS- oder ARI-System nach Demodulation im Empfangsteil 35 am 1. Kennungssignaleingang 105 der Steuerschaltung 5 detektiert, so wird zu Programmpunkt 135 verzweigt, andernfalls wird zu Programmpunkt 110 verzweigt. Bei Programmpunkt 135 findet eine Abfrage bei der Bedieneinheit 30 nach einem Belegungswunsch für die Lautsprecher 20,..,23 statt. Bei Programmpunkt 140 wird die vom Benutzer in der Bedieneinheit 30 gewählte Belegung der Lautsprecher 20,...,23 durch die Steuerschaltung 5 geschaltet. Liegt an der Bedieneinheit 30 kein Belegungswunsch des Benutzers vor, so werden die Verkehrsmeldungen auf den linken Lautsprechern 20 und 22 wiedergegeben und die Fernsprechsignale auf den rechten Lautsprechern 21 und 23. Alternativ können natürlich die Verkehrsmeldungen auf den rechten Lautsprechern 21 und 23 und die Fernsprechsignale auf den linken Lautsprechern 20 und 22 wiedergegeben werden. Bei Programmpunkt 145 wird geprüft, ob die Schleifenbelegung in der Fernsprecheinrichtung 1, nach wie vor vorliegt, das heißt, ob nach wie vor das entsprechende Kennungssignal am 2. Kennungssignaleingang 102 der Steuerschaltung 5 anliegt. Ist dies der Fall, so wird zu Programmpunkt 155 verzweigt, andernfalls wird zu Programmpunkt 150 verzweigt. Bei Programmpunkt 150 wird geprüft, ob die Verkehrsmeldungen beendet sind, das heißt, ob an dem 1. Kennungssignaleingang 105 der Steuerschaltung 5 das Kennungssignal noch anliegt. Ist dies nicht der Fall, so wird zu Programmpunkt 120 verzweigt, andernfalls wird zu Programmpunkt 135 verzweigt. Sind die Verkehrsmeldungen also noch im Gange, so erfolgt erneut eine Abfrage an die Bedieneinheit 30, ob die Belegung geändert werden soll. Sind die Verkehrsmeldungen hingegen beendet, so erfolgt ebenfalls eine Abfrage an die Bedieneinheit 30 nach der Belegung der Lautsprecher 20,...,23, die, wenn kein Belegungswunsch vorliegt, bei Programmpunkt 125 sämtlich auf Fernsprechwiedergabe umgeschaltet werden. Bei Programmpunkt 155, also nach Beendigung der Schleifenbelegung erfolgt eine Umschaltung der Belegung sämtlicher Lautsprecher 20,...,23 auf Rundfunkwiedergabe. Anschließend wird zu Programmpunkt 110 verzweigt und die Funktionsschleife erneut durchlaufen.

Die Steuerschaltung 5 dient neben der Verteilung der Audiosignale auf die verschiedenen Lautsprecher 20,...,23 zur akustischen Aufbereitung der Audiosignale, das heißt zur Einstellung von Lautstärke und/oder Klang und/oder der Geometrie der Audiosignale.

Die Steuerschaltung 5 kann in einem weiteren Ausführungsbeispiel auch einen zusätzlichen "MUTE"-Eingang besitzen, der eine softwaremäßig ansteuerbare Stummschaltung ermöglicht, um störendes Knacken bei der Umschaltung der Belegung der Lautsprecher 20,...,23 auszublenden.

Bei zusätzlicher Verwendung des oben genannten CD-Wechslers als dritte Stereoquelle kann durch die Steuerschaltung 5 auch CD-Empfang und Fernsprechempfang gemischt, das heißt durch entsprechende Belegung der Lautsprecher 20,...,23 gleichzeitig zur Wiedergabe gebracht werden. Auch die Mischung von CD-Signalen und Radio-Signalen ist möglich.

In weiteren Ausführungsbeispielen können auch andere als die beschriebenen Stereo- und Mono-Quellen an die Steuerschaltung 5 angeschlossen und durch die Steuerschaltung 5 gemischt werden. So ist auch der Anschluß von TV-Empfängern möglich.

Die Intelligenz der Steuerschaltung 5 kann in einem weiteren Ausführungsbeispiel auch in der Bedieneinheit 30 untergebracht sein, wobei die Bedieneinheit 30 zusätzlich mit dem Empfangsteil 35 und der Fernsprecheinrichtung 1 über jeweils einen Datenbus verbunden ist.

Die Detektion eines Kennungssignals für Verkehrsmeldungen und von Schleifenbelegung in der Fernsprecheinrichtung 1 findet dann durch entsprechenden Datenaustausch über den jeweiligen Datenbus in der Bedieneinheit 30 statt, die die Steuerschaltung 5 zur Umschaltung der Belegung der Lautsprecher 20,...,23 beziehungsweise zur Mischung der Rundfunkempfangssignale und der Fernsprechempfangssignale ansteuert.

## Patentansprüche

1. Rundfunkempfänger mit integrierter Fernsprecheinrichtung (1), wobei im Fernsprechbetrieb die an den Rundfunkempfänger anschließbaren Lautsprecher (20, 21, 22, 23) auf Fernsprechwiedergabe geschaltet sind, dadurch gekennzeichnet, daß bei Empfang eines vorgegebenen Signals durch den Rundfunkempfänger von einem Teil der Lautsprecher (20, 21, 22, 23) Rundfunkwiedergabe erfolgt.

2. Rundfunkempfänger nach Anspruch 1, dadurch gekennzeichnet, daß die Umschaltung in Abhängigkeit der Detektion mindestens eines über Rundfunk ausgestrahlten, vorzugsweise auf einen 57kHz Hilfsträger aufmodulierten Kennungssignales für Verkehrsmeldungen, erfolgt.

3. Rundfunkempfänger mit integrierter Fernsprecheinrichtung (1), wobei im Rundfunkempfangsbetrieb die an den Rundfunkempfänger anschließbaren Lautsprecher (20, 21, 22, 23) auf Rundfunkempfangswiedergabe geschaltet sind, dadurch gekennzeichnet, daß bei Schleifenbelegung in der Fernsprecheinrichtung (1) durch Entgegennahme eines ankommenden und/oder abgehenden Rufes von einem Teil der Lautsprecher (20, 21, 22, 23) Fernsprechwiedergabe erfolgt.

4. Rundfunkempfänger nach einem der vorherigen Ansprüche, dadurch gekennzeichnet, daß verschiedene vorgegebene Belegungen der Lautsprecher (20, 21, 22, 23) mit Fernsprech- und Rundfunksignalen geschaltet werden und daß ein Schaltvorgang nach Auswahl einer vorgegebenen Belegung mittels einer Bedieneinheit (30) eingeleitet wird.

## Claims

1. Broadcast radio receiver having an integrated telephone device (1), in which case, in the telephone mode, the loudspeakers (20, 21, 22, 23) which can be connected to the broadcast radio receiver are switched to telephone reproduction, characterized in that, when the broadcast radio receiver receives a predetermined signal, some of the loudspeakers (20, 21, 22, 23) are used for broadcast radio reproduction.

2. Broadcast radio receiver according to Claim 1, characterized in that the changeover takes place as a function of the detection of at least one identification signal, which is transmitted via broadcast radio and is preferably modulated onto a 57kHz auxiliary carrier, for traffic messages.

3. Broadcast radio receiver having an integrated telephone device (1), in which case, in broadcast radio receiving mode, the loudspeakers (20, 21, 22, 23) which can be connected to the broadcast radio receiver are switched to broadcast radio reception reproduction, characterized in that, when the loop in the telephone device (1) is busy, telephone reproduction is achieved by some of the loudspeakers (20, 21, 22, 23) being used for receiving an incoming and/or outgoing call.

4. Broadcast radio receiver according to one of the preceding claims, characterized in that various predetermined assignments of the loudspeakers (20, 21, 22, 23) to telephone and broadcast radio signals are connected, and that a switching process is initiated by means of a control unit (30) after selection of a predetermined assignment.

## Revendications

1. Récepteur radio intégrant une installation téléphonique (1), dans lequel,
en fonctionnement téléphonique, les haut-parleurs (20, 21, 22, 23) susceptibles d'être reliés au récepteur radio sont branchés sur la reproduction téléphonique,
caractérisé en ce que
à la réception d'un signal prédéterminé, pour le récepteur radio, une partie des haut-parleurs (20, 21, 22, 23) passe en reproduction radio.

2. Récepteur radio selon la revendication 1,
caractérisé en ce que
la commutation se fait en fonction de la détection d'au moins un signal caractéristique émis par radio, de préférence modulé sur une porteuse auxiliaire à 57 kHz pour les informations de circulation routières.

3. Récepteur radiophonique avec une installation téléphonique intégrée (1), dans lequel, en fonctionnement en réception radio, les haut-parleurs (20, 21, 22, 23) susceptibles d'être reliés au récepteur radio sont branchés sur la reproduction radio,
caractérisé en ce que
lors d'une occupation de boucle dans l'installation téléphonique (1) par la prise en compte d'un appel reçu et/ou d'un appel à émettre, une partie des haut-parleurs (20, 21, 22, 23) est utilisée pour la téléphonie.

4. Récepteur radiophonique selon l'une des quelconques des revendications précédentes,
caractérisé en ce que
différentes occupations prédéterminées des haut-parleurs (20, 21, 22, 23) sont branchées à des signaux téléphoniques et radiophoniques, et une commutation est induite, après sélection d'une occupation prédéterminée, par une unité de manoeuvre (30).
